# EUROPÄISCHE PATENTANMELDUNG

(11) **EP 0 530 740 A1**
(43) Veröffentlichungstag der Anmeldung: **10.03.1993**
(21) Anmeldenummer: 92114897.9
(22) Anmeldetag: 01.09.1992
(51) Int. Cl.: B60J 3/02, B29B 17/00

(54) **Sonnenblende für Kraftfahrzeuge**

(30) Priorität: 04.09.1991 DE 9110948 U
(71) Anmelder: EUGEN ZIPPERLE GmbH & CO. KG., D-71679 Asperg (DE)
(72) Erfinder: Schwarz, Gerhard, W-7146 Tamm (DE); Goletz, Hans Georg, W-7120 Bietigheim-Bissingen (DE)
(74) Vertreter: Patentanwälte Bartels, Held und Partner

(57) **Zusammenfassung**

Bei einer Sonnenblende für Kraftfahrzeuge mit einem Blendenkörper aus Schaumstoff, der in einer Fläche, die zwischen den beiden in der Gebrauchsstellung der Sonnenblende der Windschutzscheibe zugewandten bzw. abgewandten Seiten liegt, geteilt ist, und mit einem zwischen den beiden Teilen des Blendenkörpers liegenden Einleger (304) sowie einem Bezug bestehen zumindest beide Teile (301, 302) des Blendenkörpers aus vollständig recyclefähigem Kunststoff.

## Beschreibung

Die Erfindung betrifft eine Sonnenblende für Kraftfahrzeuge, welche die Merkmale des Oberbegriffs des Anspruches 1 aufweist.

Da bei Sonnenblenden mit einem einstückig ausgebildeten Blendenkörper der Einleger eingeschäumt werden muß und dabei einer hohen Temperaturbeanspruchung ausgesetzt ist, besteht der Einleger aus einem Metalldraht. Solche Einleger werden in der Regel auch bei Sonnenblenden der eingangs genannten Art verwendet, weshalb auch diese Blendenkörper für ein Recycling zerlegt werden müssen, damit die unterschiedlichen Materialien getrennt werden können. Nachteilig ist ferner, daß der Blendenkörper bei den bekannten Sonnenblenden aus Polyurethanschaum besteht.

Der Erfindung liegt die Aufgabe zugrunde, eine verbesserte Sonnenblende für Kraftfahrzeuge zu schaffen. Diese Aufgabe löst eine Sonnenblende mit den Merkmalen des Anspruches 1.

Die erfindungsgemäße Lösung führt zu kostengünstig herstellbaren und recyclefähigen Blendenkörpern. Ferner kann ein solcher Blendenkörper mit jedem gewünschten Bezugsmaterial bezogen werden. Da der Einleger in die fertiggeformten Teile des Blendenkörpers eingelegt wird, braucht er keine hohe Temperaturbeständigkeit zu haben. Es kann deshalb ein aus recyclefähigem Kunststoff bestehender Einleger verwendet werden.

Bei einer bevorzugten Ausführungsform besteht der Bezug aus zwei Folien aus recyclefähigem Kunststoff, die längs der Teilungsfuge des Blendenkörpers durch eine Schweißnaht miteinander verbunden sind. Dank einer Materialanhäufung im Bereich der Schweißnaht durch eine vorzugsweise zwischen die beiden Teile des Blendenkörpers eingreifende zusätzliche Folie aus dem gleichen Material wie der Bezug, läßt sich ohne Schwierigkeiten eine saubere Schweißnaht herstellen, von der die überstehenden Folienteile leicht abgerissen werden können.

Da in der Regel der Bezug allein die beiden Teile des Blendenkörpers nicht im erforderlichen Maße zusammenhalten kann, sind vorzugsweise Verbindungsmittel vorgesehen, die an den innenliegenden Teilen des Blendenkörpers angreifen und diese miteinander verbinden. Diese Verbindungsmittel können durch zusammenwirkende, beispielsweise sich gegenseitig hintergreifende Materialpartien der beiden Teile des Blendenkörpers gebildet sein. Als Verbindungsmittel können aber auch zumindest Abschnitte des in Vertiefungen der beiden Teile des Blendenkörpers eingelegten Einlegers vorgesehen sein, da sowohl den Vertiefungen als auch dem Einleger eine dafür geeignete Form gegeben werden kann.

Bei einer bevorzugten Ausführungsform besteht auch der Einleger aus Polypropylen. Es kann dann auch der Einleger einer Materialwiederverwendung zugeführt werden.

Vorzugsweise ist der Einleger einstückig als ein im Abstand vom Rand des Blendenkörpers verlaufender Verstärkungsrahmen ausgebildet. Besonders vorteilhaft ist es dabei, wenn der Verstärkungsrahmen einstückig mit den zur schwenkbaren Lagerung des Blendenkörpers erforderlichen Lagerteilen ausgebildet ist. Der Vorteil liegt dabei nicht nur bei der Recyclefähigkeit auch der Lagerteile, sondern ebenso bei einer Reduzierung der Herstellungskosten.

Vorzugsweise hat der Einleger ein H-Profil, das zum Grund der beiden den Einleger aufnehmenden, nutartigen Vertiefungen in den Teilen des Blendenkörpers hin offen ist. Mit einem solchen Profil erreicht man zum einen eine hohe Steifigkeit des Einlegers und zum anderen einen engen Sitz in den nutartige Vertiefungen und damit eine gute Verbindungswirkung. Selbstverständlich kann ein solcher Einleger dort, wo es zweckmäßig ist, durch angeformte Rippen verstärkt sein, die zweckmäßigerweise einstückig mit den sie aufnehmendem Kanälen des Einlegers ausgebildet sind.

Der Einleger ist selbst dann noch einstückig ausbildbar, wenn er innerhalb eines äußeren Rahmens einen inneren, rechteckförmigen Rahmen aufweist, der eine Aussparung im einen Teil des Blendenkörpers und eine dieser Aussparung zugekehrte Vertiefung im anderen Teil des Blendenkörpers begrenzt, wobei der durch die Aussparung und die Vertiefung gebildete Raum einen Spiegeleinsatz aufnimmt. Dieser Spiegeleinsatz kann auch eine Beleuchtungseinrichtung und eine entfernbare Spiegelabdeckung aufweisen. Der Montageaufwand eines solchen Einsatzes ist sehr gering. Außerdem braucht er, um das Material des Blendenkörpers wiederverwerten zu können, nur wieder als Ganzes aus dem Blendenkörper herausgenommen zu werden.

Vorteilhafterweise liegt die den die Aussparung aufweisenden Teil des Blendenkörpers bedeckende, als Bezug dienende Folie auch an den den Raum zur Aufnahme der Einlage begrenzenden Wände an.

Die Vertiefungen in den beiden Teilen des Blendenkörpers können bereits beim Schäumen eingeformt werden. Man kann sie aber auch nach dem Schäumen mittels eines erwärmten Stempels einformen. Ein solcher Stempel ermöglicht die Realisierung von Formen mit sehr geringer Wandstärke und starker Krümmung, was besonders bei Partikelschaum sehr vorteilhaft ist.

Im folgenden ist die Erfindung anhand von in der Zeichnung dargestellten Ausführungsbeispielen im einzelnen erläutert. Es zeigen
- Fig. 1: einen Querschnitt eines ersten Ausführungsbeispiels,
- Fig. 2: einen Querschnitt eines zweiten Ausführungsbeispiels,
- Fig. 3: eine Draufsicht auf die Innenseite des einen Teils des Blendenkörpers eines dritten Ausführungsbeispiels,
- Fig. 4 bis 7: Schnitte durch den in Fig. 3 dargestellten Teil des Blendenkörpers,
- Fig. 8: eine Ansicht des Einlegers des dritten Ausführungsbeispiels,
- Fig. 9 bis 12: Querschnitte des Einlegers an unterschiedlichen Stellen,
- Fig. 13: eine Draufsicht auf ein vierten Ausführungsbeispiel,
- Fig. 14: einen Schnitt nach der Linie XIV-XIV der Fig. 13,
- Fig. 15: einen Schnitt nach der Linie XV-XV der Fig. 13.
- Fig. 16: einen vergrößert dargestellten Ausschnitt der Fig. 15.
- Fig. 17: einen Schnitt entsprechend Fig. 16 vor dem Verschweißen der Folie.

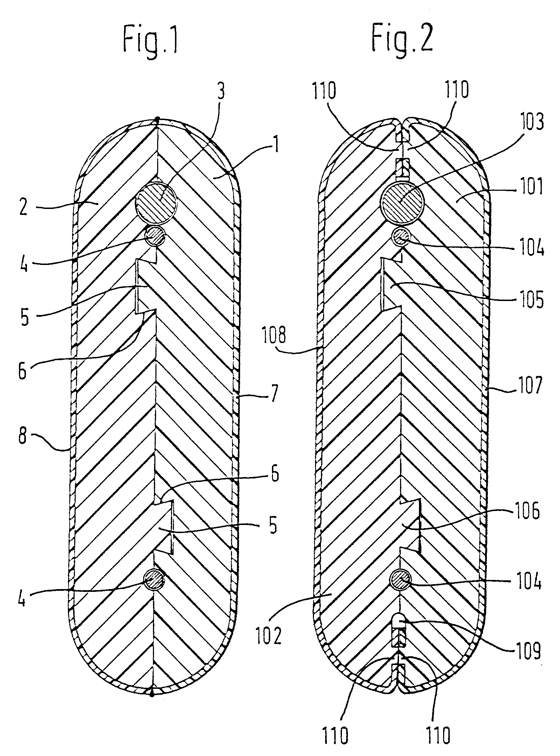

Das erste Ausführungsbeipiel einer Sonnenblende für Kraftfahrzeuge weist einen aus einem ersten Teil 1 und einem zweiten Teil 2 zusammengefügten Blendenkörper auf, dessen Form und Größe der Form und Größe bekannter Sonnenblenden entspricht. Wie Fig.1 zeigt, liegt die Teilungsebene des Blendenkörpers in der Mitte zwischen der in der Gebrauchsstellung der Sonnenblende der Windschutzscheibe zugewandten und der der Windschutzscheibe abgewandten Seite.

Beide Teile 1 und 2 des Blendenkörpers sind aus Partikelschaum hergestellt, bei dem es sich um expandiertes Polypropylen (EPP) handelt. In die im zusammengefügten Zustand dem anderen Teil zugekehrte Anlagefläche werden bei der Herstellung Vertiefungen eingeformt zur Aufnahme der Klappachse 3 und deren nicht dargestellte Lager sowie eines rahmenförmigen Einlegers 4, der aus Metall oder Kunststoff, im letztgenannten Falle vorzugsweise aus Polypropylen, bestehen kann.

Wie Fig.1 zeigt, werden die beiden Teile 1 und 2 ferner mit Materialpartien 5 versehen, welche über die Anlagefläche überstehen und Hinterschneidungen aufweisen, sowie mit Vertiefungen 6, welche auf die vorspringenden Materialpartien 5 ausgerichtet sind und eine mit deren Form korrespondierende Form haben. Beim Zusammenfügen der beiden Teile 1 und 2 des Blendenkörpers ist deshalb auf jede vorspringende Materialpartie 5 eine der Vertiefungen 6 ausgerichtet, in welche die vorspringenden Materialpartien 5 druckknopfartig einrasten. Der Fügevorgang bereitet hierdurch keinerlei Schwierigkeiten. Selbstverständlich können, abweichend von dem ersten Ausführungsbeispiel, alle vorspringenden Materialpartien 5 am einen Teil und alle Vertiefungen 6 am anderen Teil des Blendenkörpers vorgesehen sein. Ferner ist selbstverständlich die Anzahl der vorspringenden Materialpartien 5 sowie der zugeordneten Vertiefungen 6 und ihre räumliche Anordnung frei wählbar.

Nach dem Zusammenfügen der beiden Teile 1 und 2 des Blendenkörpers, zwischen denen die Klappachse 3 und der Einleger 4 liegen, wird der Blendenkörper mit einem Bezug versehen, der im Ausführungsbeispiel aus einer Kunststoffolie besteht. Das Beziehen erfolgt in der Weise, daß der erste Teil 1 des Blendenkörpers mit einem ersten Teil 7 des Bezuges und der zweite Teil 2 mit einem zweiten Teil 8 des Bezuges versehen wird. Sodann werden die beiden Teile 7 und 8 längs des auf die Teilungsfläche ausgerichteten Randes miteinander verschweißt. Die dabei aus dem Bezugsmaterial gebildete Hülle steht unter einer gewissen Vorspannung und unterstützt deshalb auch den Zusammenhalt der beiden Teile 1 und 2 des Blendenkörpers.

Das in Fig.2 dargestellte Ausführungsbeispiel stimmt weitgehend mit dem ersten Ausführungsbeispiel überein. Soweit Unterschiede vorhanden sind, sind diese dadurch bedingt, daß die beiden Teile 107 und 108 des Bezuges aus einem Material bestehen, beispielsweise einem Gewebe oder Leder, das nicht zu einer Hülle zusammengeschweißt werden kann. Im folgenden ist deshalb das zweite Ausführungsbeispiel nur insoweit im einzelnen erläutert, als es von dem ersten Ausführungsbeispiel abweicht. Wegen der übrigen Einzelheiten wird auf die Ausführungen zu dem Ausführungsbeispiel gemäß Fig.1 Bezug genommen.

Zur Aufnahme des Randes der beiden Teile 107 und 108 des Bezuges, welche die Teile 101 und 102 des aus Partikelschaumstoff bestehenden Blendenkörpers bedecken, bilden die beiden Teile 101 und 102 in der Teilungsebene längs des äußeren Randes einen umlaufenden Spalt 109, dessen Weite etwa gleich der doppelten Dicke des Bezugsmaterials ist. In diesem Spalt 109 liegt nämlich die Randzone der beiden Teile 107 und 108 des Bezugsmaterials. In dieser Randzone sind die beiden Teile 107 und 108 mit einer Mehrzahl von Durchbrüchen versehen, welche von vorspringenden Materialpartien 110 der Teile 101 und 102 des Blendenkörpers durchdrungen werden. Dabei sind, wie Fig.2 zeigt, die vorspringenden Materialpartien 110 des einen Teils 101 auf diejenigen des anderen Teils 102 ausgerichtet.

Nach der Herstellung und Trocknung der beiden Teile 101 und 102 werden diese mit den Teilen 107 bzw. 108 des Bezugsmaterials bezogen. Das Bezugsmaterial kann dabei unter einer gewissen Vorspannung gehalten werden, da die vorspringenden Materialpartien 110 das Bezugsmaterial festhalten. Anschließend werden die Klappachse 103 mit ihren nicht dargestellten Lagern sowie der Einleger 104 zwischen die Teile 101 und 102 eingesetzt und letztere werden dann zusammengefügt. Dabei dringen die vorspringenden Materialpartien 105 in die ihnen zugeordnete Vertiefung 106 ein, wodurch die beiden Teile 101 und 102 nicht nur in der richtigen Lage gehalten werden, sondern, wegen der Hinterschneidungen, auch in Anlage aneinander gehalten werden. Zum Schluß werden mittels Ultraschall die vorspringenden Materialpartien 110 miteinander verschweißt. Selbstverständlich könnten Verschweißungen auch an anderen Stellen, beispielsweise im Bereich der vorspringenden Materialpartien 105 und der Vertiefung 106, vorgesehen sein. Auch ein Verkleben der beiden Teile 101 und 102 ist möglich.

Das dritte Ausführungsbeispiel der erfindungsgemäßen Sonnenblende hat ebenfalls einen aus zwei Teilen zusammengesetzten Blendenkörper. Da diese beiden Teile als spiegelbildlich gleich ausgebildete Halbschalen ausgeführt sind, ist nur die eine Halbschale 201 dargestellt und beschrieben.

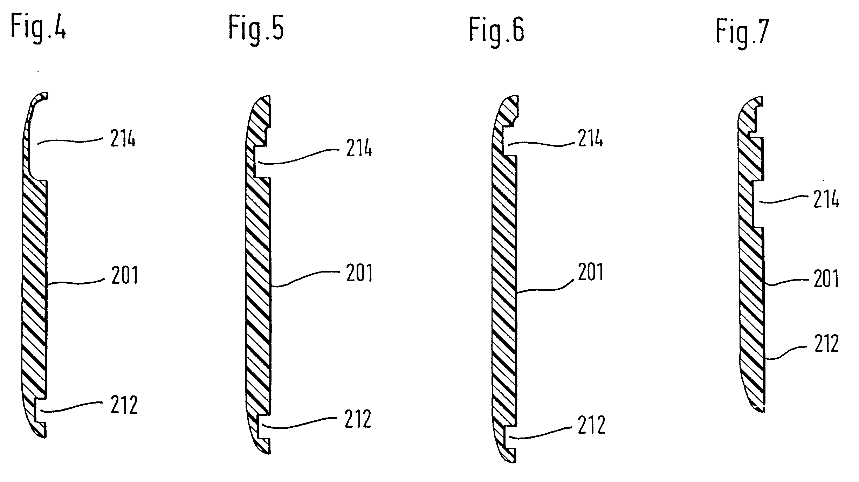

Die Halbschale 201 besteht aus Partikelschaum, und zwar einem expandierten Polypropylen. Die der anderen Halbschale zugekehrte, ebene Innenfläche ist mit einer nutartigen Vertiefung versehen, deren einer Abschnitt 112 nahe dem unteren Rand der Halbschale 201 verläuft. Die beiden an ihn sich anschließenden seitlichen Abschnitte 213 verlaufen im spitzen Winkel zum benachbarten Rand und erstrecken sich bis zu einem zum Abschnitt 212 im wesentlichen parallel verlaufenden Abschnitt 214, der eine unregelmäßige Form hat, wie auch die Fig. 4 bis 7 erkennen lassen, welche die beiden Abschnitte 212 und 214 an unterschiedlichen Stellen im Querschnitt zeigen.

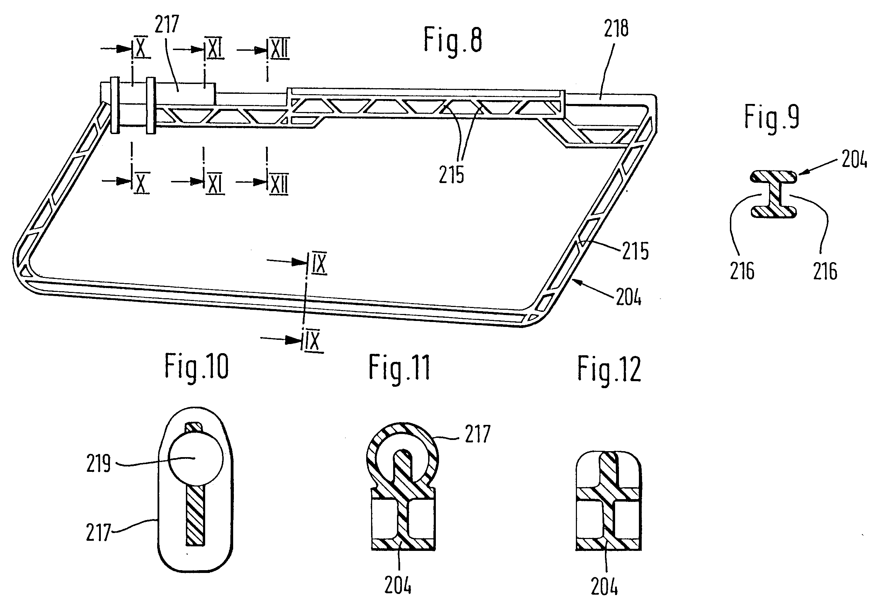

Die durch die Abschnitte 212 bis 214 gebildete, nutartige Vertiefung der Halbschale 201 und die korrespondierend ausgebildete nutartige Vertiefung der anderen Halbschale nehmen je zur Hälfte einen aus Polypropylen bestehenden, einstückig ausgebildeten Verstärkungsrahmen 204 auf der, wie Fig. 9 zeigt, ein H-förmiges Querschnittsprofil hat, wobei die in die Abschnitte 213 und 214 eingreifenden Schenkel zusätzlich durch angeformte Stege 215 versteift sind, die in den vom Verstärkungsrahmen 204 gebildeten Nuten 216 liegen.

Mit den im Abschnitt 214 der beiden ringnutartigen Vertiefungen zu liegen kommenden Schenkel des Verstärkungsrahmens 204 sind einstückig ein Lagerkörper 217 und eine Hilfsachse 218 ausgebildet. Der Lagerkörper 217 bildet eine Lagerbohrung 219 für die nicht dargestellte Hauptachse, um welche die Sonnenblende von der Nichtgebrauchsstellung in die Gebrauchsstellung und umgekehrt geschwenkt wird. Mit dieser Lagerbohrung 219 fluchtet die Hilfsachse 218 die, wie bekannt, lösbar in ein Hilfslager eingesetzt werden kann.

Der Sitz des Verstärkungsrahmens 204 in den beiden ihn aufnehmenden nutartigen Vertiefungen der Halbschalen ist so eng gewählt, daß ein ausreichender Zusammenhalt gewährleistet ist.

Zwischen die beiden Halbschalen wird im Ausführungsbeispiel nicht nur der Verstärkungsrahmen 204 eingelegt, sondern auch eine Polypropylenfolie, und zwar derart, daß sie aus der Teilungsfuge nach außen herausragt. Da diese Folie dünn ist, kann sie sich über die gesamte Innenfläche der Halbschalen 201 erstrecken. Sie liegt dann auch in der nutartigen Vertiefung der einen Halbschale. Man kann aber auch eine rahmenförmige Folie verwenden. Nachdem die beiden Halbschalen unter Zwischenlage des Verstärkungsrahmens 204 und der Polypropylenfolie zusammengefügt worden sind, wird der Blendenkörper zwischen zwei Polypropylenfolien gelegt. Diese werden dann zusammen mit der zwischen den Halbschalen liegenden Folie längs der Teilungsfuge zwischen zwei Elektroden miteinander verschweißt. Selbstverständlich wird dabei darauf geachtet, daß die beiden den Blendenkörper zwischen sich aufnehmenden Folien stramm und faltenfrei an den Halbschalen anliegen. Dank der durch die zwischengelegte Folie erreichten Materialanhäufung im Bereich der Schweißnaht läßt sich problemlos eine gute, fortlaufende Schweißnaht herstellen, wobei eine gewisse Menge des Materials in die Teilungsfuge verdrängt wird. Nach dem Schweißvorgang lassen sich die überstehenden Randbereiche längs der Schweißnaht abreißen. Die Schweißnaht hat dann einen glatten Verlauf. Außerdem steht sie dank des in die Teilungfuge verdrängten Materials nicht nach außen über.

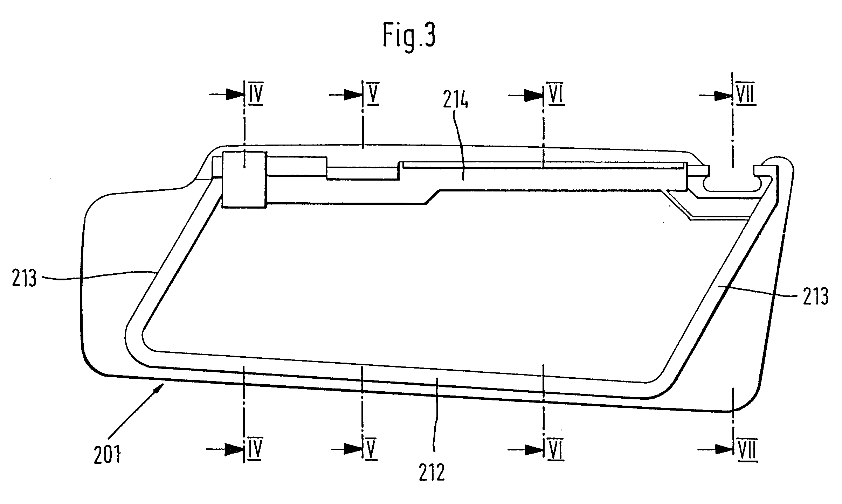

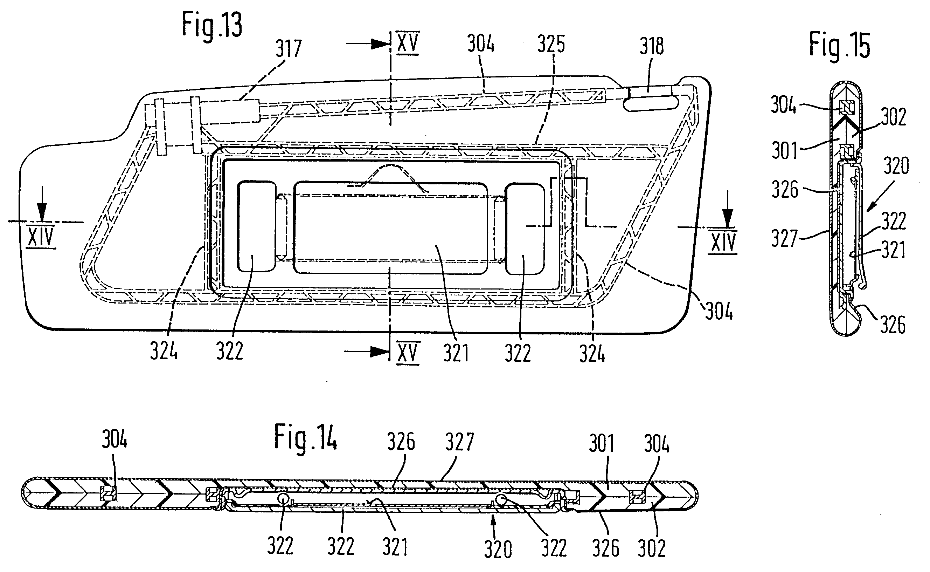

Das Ausführungsbeispiel gemäß den Fig. 13 bis 17 unterscheidet sich von dem Ausführungsbeispiel gemäß den Fig. 3 bis 12 nur durch Merkmale, die im Zusammenhang mit einem als Ganzes mit 320 bezeichneten Einsatzes stehen, der einen Spiegel 321 und rechts und links von diesem je eine Beleuchtungseinheit 322 enthält. Außerdem weist der Einsatz 320 eine um eine obenliegende Achse schwenkbare Spiegelabdeckung 322 auf, die ebenso wie die gehäuseartige, tragende Struktur des Einsatzes aus Polypropylen besteht.

Zur Aufnahme des Einsatzes 320 ist die eine Halbschale 301 auf der der anderen Halbschale 302 zugewandten Seite mit einer rechteckförmigen Vertiefung versehen, deren Tiefe etwa der halben Dicke des Einsatzes 320 entspricht. Die andere Halbschale 302 ist mit einem Durchbruch versehen, der sich mit der Vertiefung der Halbschale 301 deckt. Beide Halbschalen 301 und 302 bestehen aus EPP-Partikelschaum. Sowohl die Vertiefung als auch der Durchbruch werden ebenso wie die den Verstärkungsrahmen 304 aufnehmenden Vertiefungen bereits beim Herstellen der Halbschalen in diese eingeformt.

Wie Fig. 13 zeigt, begrenzt der parallel zum unteren Rand des Blendenkörpers verlaufende Abschnitt des Verstärkungsrahmens 204 sowohl die Vertiefung in der einen Halbschale 301 als auch den Durchbruch in der anderen Halbschale 302 zu diesem Rand hin. Seitlich werden die Vertiefung und der Durchbruch durch einstückig mit dem Verstärkungsrahmen 204 ausgebildete Schenkel 324 begrenzt, welche wie die übrigen Teile des Verstärkungsrahmens 304 ein H-Querschnittsprofil mit den Stegen 215 entsprechenden Versteifungsrippen haben. Auch der obere Rand der Vertiefungen der Halbschale 301 und des Durchbruches in der Halbschale 302 ist durch einen zusätzlichen Schenkel 325 des Verstärkungsrahmens 304 begrenzt. Dieser Schenkel 325 ist im Bereich seiner Enden mit dem Lagerkörper 317 bzw. dem an die Hilfsachse 318 anschließenden Seitenschenkel des Verstärkungsrahmens 304 einstückig ausgebildet.

Wie die Fig. 14 und 15 zeigen, liegen auch die zusätzlichen Schenkel 324 und 325 des Verstärkungsrahmens 304 in nutartigen Vertiefungen die beiden Halbschalen 301 und 302 und bilden deshalb wie der Verstärkungsrahmen 304 Verbindungselemente, welche die beiden Halbschalen 301 und 302 spielfrei miteinander verbinden. Ferner zeigen die Fig. 14 und 15, daß die die Halbschale 302 bedeckende Folie 326 die Vertiefung in der Halbschale 301 und die Seitenwände des Durchbruches in der Halbschale 302 auskleidet. Die Folie 326 bedeckt also die Halbschale 302 unterbrechungsfrei. Sie besteht wie die die Halbschale 301 bedeckende Folie 327 aus Polypropylen.

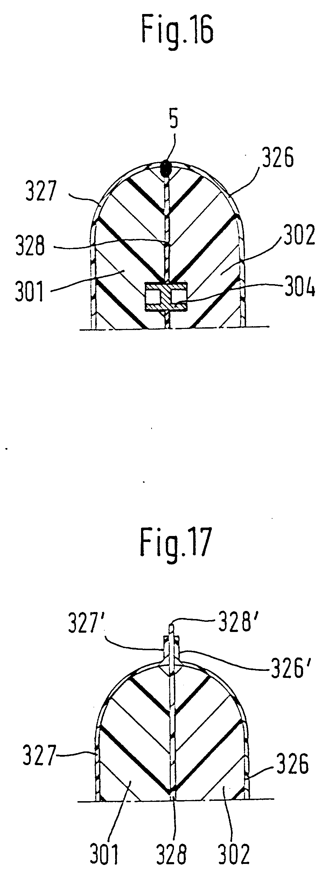

Um die beiden Folien 326 und 327 problemlos längs der Teilungsfuge des Blendenkörpers miteinander verschweißen zu können, ist, was nur in den Fig. 16 und 17 dargestellt ist, zwischen die beiden Halbschalen 301 und 302 eine dritte Polypropylenfolie 328 eingelegt, die zunächst nach außen übersteht. Dieser überstehende Streifen ist mit 328' bezeichnet. Er liegt vor dem Verschweißen zwischen den überstenden Randstreifen 326' und 327' der beiden Folien 326 bzw. 327. Die dritte Folie 328 braucht sich nicht über die gesamte Innenfläche der beiden Halbschalen 301 und 302 zu erstrecken. Es genügt, wenn sie zwischen deren Randbereich liegt. Wenn nun mittels Elektroden die drei Folien längs der Trennfuge des Blendenkörpers verschweißt werden, läßt sich dank der durch die dritte Folie 328 bedingten Materialanhäufung eine einwandfreie Schweißnaht 329 erreichen. Bei dem Schweißvorgang wird, wie Fig. 16 zeigt, ein Teil des Materials in die Trennfuge hineingedrängt. Die Schweißnaht 329 steht deshalb praktisch nicht nach außen über. Die überstehenden Randstreifen 326', 327' und 328' lassen sich problemlos längs der Schweißnaht 329 abreißen.

Nach dem Verschweißen der Folien 326 und 327 braucht nur noch der Einsatz 320 eingesetzt zu werden, der mit seitlich überstehenden Rastelementen versehen sein kann, die mit den Schenkeln 324 zusammenwirken und den Einsatz 320 festhalten. Der elektrische Anschluß der Beleuchtungseinheiten 322 erfolgt entweder über Kabel oder über elektrisch leitende Folien oder Bereiche von solchen Folien.

Wegen weiterer Einzelheiten wird auf die Ausführungen zu den vorausgehenden Ausführungsbeispielen Bezug genommen.

## Patentansprüche

1. Sonnenblende für Kraftfahrzeuge mit einem Blendenkörper aus Schaumstoff, der in einer Fläche, die zwischen den beiden in der Gebrauchsstellung der Sonnenblende der Windschutzscheibe zugewandten bzw. abgewandten Seiten liegt, geteilt ist, einem zwischen den beiden Teilen des Blendenkörpers liegenden Einleger und einem Bezug, dadurch gekennzeichnet, daß zumindest beide Teile (1,2;101,102;201;301,302) des Blendenkörpers aus vollständig recyclefähigem Kunststoff bestehen.

2. Sonnenblende nach Anspruch 1, dadurch gekennzeichnet, daß es sich bei dem recyclefähigen Kunststoff um einen expandierbaren Kunststoff handelt, vorzugsweise Partikelschaum.

3. Sonnenblende nach Anspruch 1 oder 2, dadurch gekennzeichnet, daß der Bezug aus zwei Folien (7,8;107, 108;326,327) aus recyclefähigem Kunststoff, vorzugsweise Polypropylen, besteht, die längs der Teilungsfuge des Blendenkörpers durch eine Schweißnaht (329) miteinander verbunden sind.

4. Sonnenblende nach Anspruch 3, gekennzeichnet durch eine Materialanhäufung im Bereich der Schweißnaht (329) durch eine zwischen die beiden Teile (301,302) des Blendenkörpers eingreifende Folie (328) aus dem gleichen Material wie der Bezug.

5. Sonnenblende nach einem der Ansprüche 1 bis 4, dadurch gekennzeichnet, daß die beiden Teile (1,2;101,102;301,302) des Blendenkörpers durch an ihnen innen angreifende Verbindungsmittel (5,6;105,106;204;304) miteinander verbunden sind.

6. Sonnenblende nach Anspruch 5, daß die Verbindungsmittel durch zusammenwirkende Materialpartien (5,6;105,106) der beiden Teile (1,2;101,102) des Blendenkörpers gebildet sind.

7. Sonnenblende nach einem der Ansprüche 1 bis 6, dadurch gekennzeichnet, daß die Verbindungsmittel wenigstens teilweise zumindest durch Abschnitte des in Vertiefungen (212,213,214) der beiden Teile des Blendenkörpers eingelegten Einlegers (204;304) gebildet sind.

8. Sonnenblende nach einem der Ansprüche 1 bis 7, dadurch gekennzeichnet, daß der Einleger (204;304) aus vollständig recyclebarem Kunststoff, vorzugsweise aus Polypropylen, besteht.

9. Sonnenblende nach Anspruch 8, dadurch gekennzeichnet, daß der Einleger ein einstückig ausgebildeter, im Abstand vom Rand des Blendenkörpers verlaufender Verstärkungsrahmen (204;304) ist.

10. Sonnenblende nach Anspruch 9, dadurch gekennzeichnet, daß der Verstärkungsrahmen (204;304) einstückig mit Teilen (217,218) zur schwenkbaren Lagerung des Blendenkörpers ausgebildet ist.

11. Sonnenblende nach einem der Ansprüche 7 bis 10, dadurch gekennzeichnet, daß der Einleger (204;304) ein H-Profil aufweist, das zum Grund der beiden den Einleger aufnehmenden, nutartigen Vertiefungen (212,213,214) der beiden Teile des Blendenkörpers hin offen ist.

12. Sonnenblende nach Anspruch 12, dadurch gekennzeichnet, daß zumindest ein Abschnitt des Verstärkungsrahmens (204;304) in den beiden durch das H-Profil gebildeten Kanälen gebildete Rippen (215) aufweist, die einstückig mit den die Kanäle begrenzenden Materialpartien ausgebildet sind.

13. Sonnenblende nach einem der Ansprüche 1 bis 12, dadurch gekennzeichnet, daß der Einleger (304) innerhalb eines äußeren Rahmens einen mit ihm einstückig ausgebildeten, rechteckförmigen inneren Rahmen aufweist, der eine Aussparung des einen Teils (302) des Blendenkörpers und eine diesem zugekehrte Vertiefung im anderen Teil (301) des Blendenkörpers begrenzt, und daß in die Vertiefung und die Aussparung ein Einsatz (320) mit einem Spiegel (321) eingesetzt ist.

14. Sonnenblende nach Anspruch 13, dadurch gekennzeichnet, daß der Einsatz (320) wenigstens eine Beleuchtungseinrichtung (322) aufweist.

15. Sonnenblende nach Anspruch 13 oder 14, dadurch gekennzeichnet, daß die den die Aussparung aufweisenden Teil (302) des Blendenkörpers bedeckende Bezugsfolie (327) an den Begrenzungswänden des den Einsatz (320) aufnehmenden Raumes anliegt.
